# EUROPÄISCHE PATENTSCHRIFT

(11) **EP 1 312 332 B1**
(45) Veröffentlichungstag und Bekanntmachung des Hinweises auf die Patenterteilung: **10.08.2005**
(21) Anmeldenummer: 01127644.1
(22) Anmeldetag: 20.11.2001
(51) Int. Cl.: A61G 13/02

(54) **Verfahren und Vorrichtung zur Fernbedienung eines Operationstisches**
Method and apparatus for remote control of an operating table
Procedé et dispositif pour télécommander une table d'operation

(43) Veröffentlichungstag der Anmeldung: 21.05.2003
(73) Patentinhaber: TRUMPF Medizin Systeme GmbH., 07318 Saalfeld (DE)
(72) Erfinder: Döring, Ulrich., D-07318 Saalfeld (DE); Streitberger, Christian., D-07318 Saalfeld (DE); Georgi, Falk., D-07422 Unterwirbach (DE)
(74) Vertreter: HOEGER, STELLRECHT & PARTNER Patentanwälte

(56) Entgegenhaltungen:
- DE-A- 19 929 907
- US-A- 4 211 998

## Beschreibung

Die Erfindung betrifft ein Verfahren zur Fernbedienung eines Operationstisches, der mittels einer Antriebseinrichtung motorisch verstellbar ist, wobei von einer Bedienungseinheit drahtlos Befehlssignale an den Operationstisch übertragen werden zum Steuern der Antriebseinrichtung.

Die Erfindung betrifft außerdem eine Vorrichtung zur Durchführung des Verfahrens.

Operationstische werden zunehmend mehrteilig ausgestaltet und umfassen häufig eine höhenverstellbare Tragsäule sowie eine Operationstischplatte mit mindestens einem schwenkbar gelagerten Tischplattenelement. Der Operationstisch weist üblicherweise außerdem eine elektromotorische Antriebseinrichtung zum Verstellen des mindestens einen Tischplattenelementes sowie der Tragsäule auf. Die Steuerung der Antriebseinrichtung erfolgt durch Eingabe entsprechender Befehlssignale. Hierzu kommt üblicherweise eine Bedienungseinheit zum Einsatz, die entweder über ein Verbindungskabel an den Operationstisch angeschlossen ist oder über eine Infrarot- oder Funkverbindung mit dem Operationstisch in Verbindung steht. Eine Steuereinheit dieser Art ist aus der DE 199 29 907 A bekannt.

Die Übertragung der Befehlssignale mittels einer Infrarotverbindung hat den Vorteil, daß keine elektromagnetische Störstrahlung erzeugt wird und daß sie durch konstruktiv einfache Mittel erzielt werden kann. Eine Infrarotübertragung ermöglicht allerdings nur sehr begrenzte Datenübertragungsraten und optisch undurchlässige Hindernisse verhindern eine Datenübertragung.

Kommt zur Übertragung der Befehlssignale von der Bedienungseinheit zum Operationstisch eine Funkverbindung zum Einsatz, so hat dies den Vorteil, daß hohe Datenübertragungsraten und eine sehr stabile Verbindung erzielt werden können. Eine Funkverbindung zwischen der Bedienungseinheit und dem Operationstisch zeichnet sich außerdem durch eine große Reichweite aus.

Erfolgt die Kommunikation zwischen Bedienungseinheit und Operationstisch per Funk, so ist damit allerdings die Schwierigkeit verbunden, daß die Verbindung der Geräte selbst dann erhalten bleibt, wenn der Operationstisch aus dem Raum, in dem er zuvor mittels der Bedienungseinheit bedient wurde, herausgefahren wird. Damit besteht die Gefahr, daß mittels der als separate Baueinheit ausgebildeten Bedienungseinheit irrtümlicherweise der falsche Operationstisch angesteuert wird, beispielsweise ein Tisch, der nicht im Operationssaal positioniert ist, sondern sich in einem Nachbarraum befindet.

Aufgabe der vorliegenden Erfindung ist es, ein Verfahren sowie eine Vorrichtung zur Fernbedienung eines Operationstisches der eingangs genannten Art derart weiterzubilden, daß auf konstruktiv einfache Weise eine eindeutige Zuordnung der Bedienungseinheit zu einem Operationstisch gewährleistet ist.

Diese Aufgabe wird bei einem Verfahren der eingangs genannten Art erfindungsgemäß dadurch gelöst, daß vor der Übertragung von Befehlssignalen von der Bedienungseinheit zunächst ein Infrarot-Kontrollsignal an den Operationstisch ausgesendet und der Empfang des Kontrollsignales der Bedienungseinheit per Funksignal bestätigt wird. Die Übertragung des Infrarot-Kontrollsignals von der Bedienungseinheit zum Operationstisch stellt sicher, daß zwischen der Bedienungseinheit und dem zu bedienenden Operationstisch eine Sichtverbindung besteht. Dadurch wird auf konstruktiv einfache Weise eine eindeutige Zuordnung zwischen den Geräten sichergestellt. Es kann nur der Operationstisch bedient werden, der sich in dem Raum befindet, in welchem die Bedienungseinheit - beispielsweise in Form einer Wandkonsole - positioniert ist. Eine irrtümliche Verstellung eines Operationstisches, der sich in einem Nachbarraum befindet, wird dadurch vermieden. Die Übertragung des Bestätigungssignales erfolgt hierbei in Form eines Funksignales mit dem Vorteilen einer hohen Datenübertragungsrate und einer stabilen Verbindung.

Günstig ist es, wenn die Antriebseinrichtung erst aktivierbar ist, nachdem die Bedienungseinheit das den Empfang bestätigende Funksignal des Operationstisches empfangen hat. Somit kann die Aktivierung der Antriebseinrichtung erst dann erfolgen, wenn der Operationstisch ein Bestätigungssignal ausgesendet und dieses von der Bedienungseinheit empfangen wurde.

Von besonderem Vorteil ist es, wenn die Befehlssignale zwischen der Bedienungseinheit und dem Operationstisch in Form von Funksignalen übertragen werden. Hierbei kann eine bidirektionale Funkverbindung zum Einsatz kommen, so daß in beiden Richtungen hohe Datenübertragungsraten erzielt werden können und eine stabile Verbindung aufrechterhalten werden kann.

Es kann auch vorgesehen sein, daß die Befehlssignale von der Bedienungseinheit zum Operationstisch in Form von Infrarotsignalen übertragen werden. Dadurch wird sichergestellt, daß bei der Übertragung von Befehlssignalen eine Sichtverbindung zwischen der Bedienungseinheit und dem Operationstisch besteht. Entsprechend der Aussendung der Bestätigungssignale können auch Rückmeldesignale, die als Reaktion auf den Empfang von Befehlssignalen vom Operationstisch ausgegeben werden, als Funksignale übertragen werden.

Bei einer vorteilhaften Ausführungsform des erfindungsgemäßen Verfahrens ist vorgesehen, daß von der Bedienungseinheit in vorgegebenen Abständen - vorzugsweise periodisch - wiederholt Infrarot-Kontrollsignale ausgesendet werden und jeweils der Empfang eines Bestätigungssignales vom Operationstisch überwacht wird. Dies ermöglicht eine quasi-kontinuierliche Überwachung der Zuordnung von Bedienungseinheit und Operationstisch. Die wiederholte Aussendung von Infrarot-Kontrollsignalen hat außerdem den Vorteil, daß ein Operationstisch, der in den Raum eingefahren wird, in dem sich die Bedienungseinheit befindet, von der Bedienungseinheit selbsttätig erkannt wird, so daß die Bedienungseinheit diesem Operationstisch zugeordnet wird.

Die Operationstische sind üblicherweise ortsfest fixierbar. Im Zusammenhang mit derartigen Operationstischen ist bei einer vorteilhaften Ausführungsform des erfindungsgemäßen Verfahrens vorgesehen, daß die Antriebseinrichtung des Operationstisches nur während einer ortsfesten Fixierung des Operationstisches aktivierbar ist, sofern keine weiteren Infrarot-Kontrollsignale übertragen werden. Dadurch kann eine periodische Infrarot-Abfrage der Bedienungseinheit entfallen, es ist vielmehr nur der einmalige Empfang eines Infrarot-Kontrollsignales und dessen Bestätigung durch den Operationstisch erforderlich, sofern der Operationstisch ortsfest fixiert wurde. Solange die ortsfeste Fixierung andauert, bleibt die einmalige Zuordnung zwischen Bedienungseinheit und Operationstisch aufgrund der fehlenden Mobilität bestehen. Wird die Fixierung gelöst, so wird die Antriebseinrichtung zum Verstellen des Operationstisches blockiert, sofern nicht anschließend wieder ein Infrarot-Kontrollsignal von der Bedienungseinheit empfangen wird und damit eine Sichtverbindung zwischen den beiden Geräten besteht.

Wie eingangs erwähnt, betrifft die Erfindung außerdem eine Vorrichtung zur Fernbedienung eines Operationstisches. Die Vorrichtung umfaßt eine Bedienungseinheit und einen Operationstisch mit einer Antriebseinrichtung, wobei der Operationstisch mittels der Antriebseinrichtung motorisch verstellbar ist und wobei von der Bedienungseinheit drahtlos Befehlssignale an den Operationstisch übertragbar sind zum wahlweisen Aktivieren der Antriebseinrichtung.

Bei einer derartigen Vorrichtung wird die eingangs genannte Aufgabe dadurch gelöst, daß die Bedienungseinheit einen Infrarot-Sender aufweist zum Aussenden eines Infrarot-Kontrollsignales sowie einen Funkempfänger zum Empfang eines Funksignales, und daß der Operationstisch einen Infrarot-Empfänger aufweist zum Empfang des Infrarot-Kontrollsignales sowie einen Funksender zum Aussenden eines dem Empfang des Kontrollsignales bestätigenden Bestätigungssignales, wobei die Antriebseinrichtung erst aktivierbar ist, wenn die Bedienungseinheit das Bestätigungssignal empfangen hat. Wie voranstehend bereits erläutert, wird durch die Übertragung des Infrarot-Kontrollsignales, die eine Sichtverbindung zwischen den Geräten voraussetzt, auf konstruktiv einfache Weise eine eindeutige Zuordnung der Bedienungseinheit zu einem bestimmten Operationstisch sichergestellt. Die Übertragung des Bestätigungssignales erfolgt jedoch per Funk und ist somit sehr unanfällig gegenüber Störungen.

Die Befehlssignale sind vorzugsweise in Form von Funksignalen übertragbar. Hierbei kann eine bidirektionale Verbindung zwischen der Bedienungseinheit und dem Operationstisch vorgesehen sein, so daß zur Übertragung der Befehlssignale sowie gegebenenfalls zur Übertragung von Rückmeldesignalen hohe Datenübertragungsraten zum Einsatz kommen können.

Alternativ kann vorgesehen sein, daß die Befehlssignale von der Bedienungseinheit zum Operationstisch in Form von Infrarotsignalen übertragbar sind.

Günstig ist es, wenn von der Bedienungseinheit in vorgegebenen Abständen - vorzugsweise periodisch - wiederholt Infrarot-Kontrollsignale aussendbar sind und jeweils der Empfang eines Bestätigungssignales überwachbar ist. Hierzu kann die Bedienungseinheit eine Überwachungseinheit umfassen, die sicherstellt, daß Befehlssignale nur dann ausgesendet werden können, wenn zuvor ein Bestätigungssignal vom Operationstisch empfangen wurde.

Der Operationstisch umfaßt vorzugsweise ein Fixierglied zum ortsfesten Fixieren des Operationstisches und die Antriebseinrichtung ist nur im fixierten Zustand des Operationstisches aktivierbar, sofern keine weiteren Infrarot-Kontrollsignale übertragen werden. Wie bereits erläutert, kann dadurch eine periodische Infrarot-Abfrage entfallen, solange der Operationstisch im Raum fixiert ist.

Das Fixierglied kann beispielsweise eine Bremse umfassen, wobei die Antriebseinrichtung bei Ausbleiben von Infrarot-Kontrollsignalen nur bei festgestellter Bremse aktivierbar ist. Werden von der Bedienungseinheit Befehlssignale ausgesendet, während das Fixierglied, beispielsweise die Bremse, gelöst ist, so werden diese Befehlssignale vom Operationstisch ignoriert, sofern der Operationstisch nicht auch in vorgegebenen Abständen Infrarot-Kontrollsignale empfängt und somit eine Sichtverbindung zwischen den Geräten besteht. Hierzu ist es günstig, wenn der Operationstisch eine Signalverarbeitungseinheit aufweist, die sowohl mit dem Infrarot-Empfänger als auch mit der Antriebseinrichtung und dem Fixierglied des Operationstisches in elektrischer Verbindung steht, und die eingehende Befehlssignale bei Ausbleiben periodischer Infrarot-Kontrollsignale nur dann an die Antriebseinrichtung weiterleitet, wenn sich das Fixierglied in einem den Operationstisch ortsfest fixierenden Zustand befindet. So kann beispielsweise vorgesehen sein, daß der Operationstisch mobil ausgestaltet ist und zum Fixieren einen absenkbaren Fuß aufweist. Letzterer bildet ein Fixierglied zum ortsfesten Fixieren des Operationstisches dergestalt, daß vom absenkbaren Fuß ein den fixierten Zustand des Operationstisches anzeigendes Signal bereitgestellt wird. Dieses Signal kann über eine elektrische Verbindung der Signalverarbeitungseinheit des Operationstisches eingegeben werden, so daß diese eingehende Befehlssignale an die Antriebseinrichtung weiterleitet, sofern der Fuß sich in seinem abgesenkten Zustand befindet und mindestens ein Infrarot-Kontrollsignal empfangen wurde. Wird der Fuß angehoben, so daß der Operationstisch im Raum bewegt werden kann, so entfällt das den fixierten Zustand des Operationstisches anzeigende Signal und von der Signalverarbeitungseinheit werden nur dann Befehlssignale an die Antriebseinrichtung weitergeleitet, wenn in vorgegebenen Abständen erneut Infrarot-Kontrollsignale der Bedienungseinheit empfangen werden.

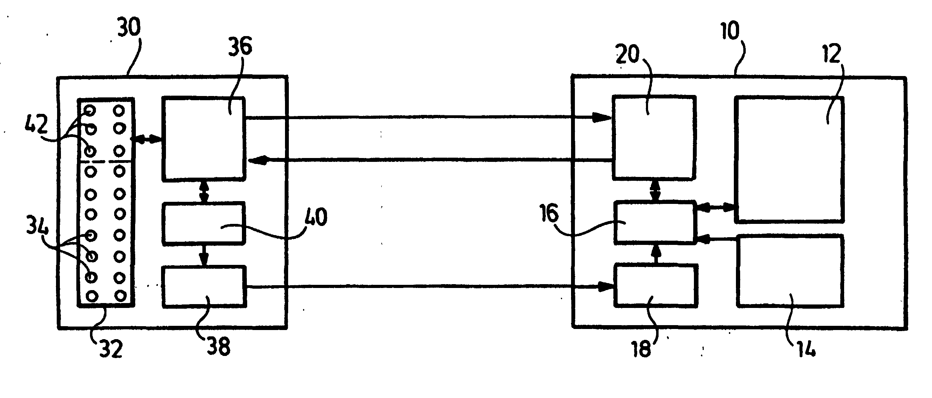

Die nachfolgende Beschreibung einer bevorzugten Ausführungsform der Erfindung dient im Zusammenhang mit der Zeichnung der näheren Erläuterung.

Die einzige Figur der Zeichnung zeigt in Form eines Blockschaltbildes eine erfindungsgemäße Vorrichtung zur Fernbedienung eines Operationstisches.

Der Operationstisch ist mit dem Bezugszeichen 10 belegt und umfaßt in bekannter und deshalb in der Zeichnung nicht dargestellter Weise eine höhenverstellbare Tragsäule, auf der sich eine Tischplatte mit mehreren verschwenkbar gelagerten Tischplattenelementen abstützt. Die Tischplatte kann beispielsweise ein Basiselement umfassen, das mit der Tragsäule lösbar verbindbar ist, sowie ein Rückenelement und ein Fußelement, die jeweils am Basiselement angelenkt sind und relativ zu diesem um horizontale Achsen verschwenkt werden können. Zusätzlich kann das Basiselement in Längsrichtung der Operationstischplatte relativ zur Tragsäule verschoben werden. Derartige Operationstische sind an sich bekannt und beispielsweise in der DE 197 51 320 A1 beschrieben.

Die Operationstischplatte 10 umfaßt eine Antriebseinrichtung 12 in Form eines an sich bekannten Elektroantriebes, der beispielsweise in die Operationstischplatte oder in die Tragsäule integriert sein kann.

Zur ortsfesten Fixierung des Operationstisches 10 kommt ein manuell betätigbares Bremsglied 14 zum Einsatz, das ebenso wie die Antriebseinrichtung 12 über elektrische Verbindungen mit einer Signalverarbeitungseinheit 16 des Operationstisches in Verbindung steht. An die Signalverarbeitungseinheit 16 ist ein Infrarot-Empfänger 18 sowie eine Sende- und Empfangseinheit 20 zum Aussenden und Empfangen von Funksignalen angeschlossen.

Zum motorischen Verstellen des Operationstisches 10 mittels der Antriebseinrichtung 12 kommt eine Bedienungseinheit 30 zum Einsatz, die beispielsweise als Wandkonsole ortsfest in einem Operationssaal fixiert werden kann. Die Bedienungseinheit 30 umfaßt ein Eingabeelement in Form einer Eingabetastatur 32 mit mehreren Eingabetasten 34 zum Eingeben von Steuerbefehlen. Letztere werden in Form von Befehlssignalen per Funk an die Sende- und Empfangseinheit 20 des Operationstisches 10 übertragen. Hierzu weist die Bedienungseinheit 30 eine entsprechende Sende- und Empfangseinheit 36 auf. Zwischen den Sende- und Empfangseinheiten 36 und 20 der Bedienungseinheit 30 und des Operationstisches 10 kann somit eine bidirektionale Funkverbindung hergestellt werden.

Die Übertragung von Befehlssignalen von der Bedienungseinheit 30 zum Operationstisch 10 kann allerdings erst dann erfolgen, nachdem zuvor mittels eines Infrarot-Senders 38 der Bedienungseinheit 30 ein Infrarotsignal ausgesendet, dieses vom Infrarot-Empfänger 18 des Operationstisches 10 empfangen und der Operationstisch 10 daraufhin mittels der Sende- und Empfangseinheit 20 ein Funksignal an die Sende- und Empfangseinheit 36 der Bedienungseinheit 30 übermittelt hat. Der Eingang eines den Empfang des Infrarot-Kontrollsignales bestätigenden Bestätigungssignales wird von einer Überwachungseinheit 40 der Bedienungseinheit 30 überwacht.

Zusätzlich zu den voranstehend erläuterten Bestätigungssignalen können von der Sende- und Empfangseinheit 20 des Operationstisch 10 auch den jeweils aktuellen Betriebszustand des Operationstisch 10 anzeigende Zustandssignale übertragen werden, die von der Sende- und Empfangseinheit 36 der Bedienungseinheit 30 an Kontrolleuchten 42 weitergegeben werden, so daß der Betriebszustand des Operationstisches 10 anhand der Kontrolleuchten 42 der Bedienungseinheit 30 erkannt werden kann.

Die Bedienung des Operationstisches 10 mittels der Bedienungseinheit 30 erfolgt dergestalt, daß zunächst in einem ersten Verfahrensschritt ein Infrarot-Kontrollsignal vom Infrarot-Sender 38 ausgesendet wird. Liegt eine Sichtverbindung zwischen der Bedienungseinheit 30 und dem Operationstisch 10 vor, so wird das Infrarot-Kontrollsignal vom Infrarot-Empfänger 18 empfangen und an die Signalverarbeitungseinheit 16 weitergeleitet. Über die Sende- und Empfangseinheit 20 wird der Empfang des Infrarot-Signals der Bedienungseinheit 30 per Funk bestätigt. Das Funksignal wird von der Sende- und Empfangseinheit 36 empfangen und an die Überwachungseinheit 40 weitergeleitet. Erst nach Eingang des Bestätigungssignales werden Befehlssignale, die mittels der Eingabetastatur 32 von einer Bedienungsperson eingegeben wurden, über die bidirektionale Funkverbundung an den Operationstisch 10 übertragen. Die Funkübertragung kann beispielsweise im DECT-Verfahren erfolgen.

Während der weiteren Bedienung des Operationstisches 10 werden von der Bedienungseinheit 30 periodisch Infrarot-Kontrollsignale ausgesendet, deren Empfang vom Operationstisch 10 per Funk bestätigt wird. Wird die zur Übertragung der Infrarot-Kontrollsignale erforderliche Sichtverbindung zwischen den Geräten unterbrochen, so werden an der Sende- und Empfangseinheit 20 eingehende Befehlssignale nur dann verarbeitet, wenn der Operationstisch ortsfest im Raum fixiert ist. Hierzu wird der Signalverarbeitungseinheit 16 bei festgestelltem Bremsglied 14 ein den fixierten Zustand des Operationstisches 10 anzeigendes Signal bereitgestellt. An der Sende- und Empfangseinheit 20 eingehende Befehlssignale werden nach erstmaligem Empfang eines Infrarot-Kontrollsignales und nachfolgendem Ausbleiben weiterer Infrarot-Kontrollsignale von der Signalverarbeitungseinheit 16 nur dann an die Antriebseinrichtung 12 weitergeleitet, wenn die Signalverarbeitungseinheit 16 mit dem den fixierten Zustand des Operationstisches 10 anzeigenden Signal beaufschlagt ist. Liegt ein derartiges Signal nicht vor, so kann die Antriebseinrichtung 12 nur dann aktiviert werden, wenn vom Infrarot-Empfänger 18 erneut ein Infrarot-Kontrollsignal der Bedienungseinheit 30 empfangen wird.

## Patentansprüche

1. Verfahren zur Fernbedienung eines Operationstisches (10), der mittels einer Antriebseinrichtung (12) motorisch verstellbar ist, wobei von einer Bedienungseinheit (30) drahtlos Befehlssignale an den Operationstisch (10) übertragen werden zum Steuern der Antriebseinrichtung (12), **dadurch gekennzeichnet, daß** vor der Übertragung von Befehlssignalen von der Bedienungseinheit (30) zunächst ein Infrarot-Kontrollsignal an den Operationstisch (10) ausgesendet und der Empfang des Kontrollsignales der Bedienungseinheit (30) per Funksignal bestätigt wird.

2. Verfahren nach Anspruch 1, **dadurch gekennzeichnet, daß** die Antriebseinrichtung (12) erst aktivierbar ist, nachdem die Bedienungseinheit (30) das den Empfang bestätigende Funksignal des Operationstisches (10) empfangen hat.

3. Verfahren nach Anspruch 1 oder 2, **dadurch gekennzeichnet, daß** die Befehlssignale in Form von Funksignalen übertragen werden.

4. Verfahren nach Anspruch 1 oder 2, **dadurch gekennzeichnet, daß** die Befehlssignale in Form von Infrarot-Signalen übertragen werden.

5. Verfahren nach einem der voranstehenden Ansprüche, **dadurch gekennzeichnet, daß** von der Bedienungseinheit (30) in vorgegebenen Abständen wiederholt Infrarot-Signale ausgesendet werden und jeweils der Empfang eines Bestätigungssignales überwacht wird.

6. Verfahren nach einem der voranstehenden Ansprüche, **dadurch gekennzeichnet, daß** der Operationstisch (10) ortsfest fixierbar ist und die Antriebseinrichtung (12) nur während einer ortsfesten Fixierung des Operationstisches (10) aktivierbar ist, sofern keine weiteren Infrarot-Kontrollsignale übertragen werden.

7. Vorrichtung zur Durchführung des Verfahrens nach einem der voranstehenden Ansprüche umfassend eine Bedienungseinheit (30) und einen Operationstisch (10) mit einer Antriebseinrichtung (12), wobei der Operationstisch (10) mittels der Antriebseinrichtung (12) motorisch verstellbar ist und wobei von der Bedienungseinheit (30) drahtlos Befehlssignale an den Operationstisch (10) übertragbar sind zum wahlweisen Aktivieren der Antriebseinrichtung (12), **dadurch gekennzeichnet, daß** die Bedienungseinheit (30) einen Infrarot-Sender (38) aufweist zum Aussenden eines Infrarot-Kontrollsignales sowie einen Funkempfänger (36) zum Empfang eines Funksignales, und daß der Operationstisch (10) einen Infrarot-Empfänger (18) aufweist zum Empfang des Infrarot-Kontrollsignales sowie einen Funksender (20) zum Aussenden eines den Empfang des Kontrollsignales bestätigenden Bestätigungssignales, wobei die Antriebseinrichtung (12) erst aktivierbar ist, nachdem die Bedienungseinheit (30) das Bestätigungssignal empfangen hat.

8. Vorrichtung nach Anspruch 7, **dadurch gekennzeichnet, daß** die Befehlssignale in Form von Funksignalen übertragbar sind.

9. Vorrichtung nach Anspruch 7, **dadurch gekennzeichnet, daß** die Befehlssignale in Form von Infrarot-Signalen übertragbar sind.

10. Vorrichtung nach einem der Ansprüche 7 bis 9, **dadurch gekennzeichnet, daß** von der Bedienungseinheit (30) in vorgegebenen Abständen wiederholt Infrarot-Kontrollsignale aussendbar und jeweils der Empfang eines Bestätigungssignales überwachbar ist.

11. Vorrichtung nach einem der Ansprüche 7 bis 10, **dadurch gekennzeichnet, daß** der Operationstisch (10) ein Fixierglied (14) zum ortsfesten Fixieren des Operationstisches (10) aufweist, und daß die Antriebseinrichtung (12) nur im fixierten Zustand des Operationstisches (10) aktivierbar ist, sofern keine weiteren Infrarot-Kontrollsignale übertragen werden.

12. Vorrichtung nach Anspruch 11, **dadurch gekennzeichnet, daß** das Fixierglied eine Bremse (14) umfaßt, und daß die Antriebseinrichtung (12) bei Ausbleiben von Infrarot-Kontrollsignalen nur bei festgestellter Bremse aktivierbar ist.

## Claims

1. Method for the remote control of an operating table (10) which can be motor-adjusted by means of a drive device (12), command signals for controlling the drive device (12) being wirelessly transmitted to the operating table (10) from an operator control unit (30), **characterized in that** an infrared control signal is first emitted to the operating table (10) by the operator control unit (30) before the transmission of command signals and the reception of the control signal from the operator control unit (30) is confirmed by radio signal.

2. Method as claimed in claim 1, **characterized in that** the drive device (12) can only be activated after the operator control unit (30) has received the radio signal from the operating table (10) confirming reception.

3. Method as claimed in claim 1 or 2, **characterized in that** the command signals are transmitted in the form of radio signals.

4. Method as claimed in claim 1 or 2, **characterized in that** the command signals are transmitted in the form of infrared signals.

5. Method as claimed in one of the preceding claims, **characterized in that** infrared signals are repeatedly emitted by the operator control unit (30) at predetermined intervals and in each case the reception of a confirmation signal is monitored.

6. Method as claimed in one of the preceding claims, **characterized in that** the operating table (10) can be fixed in place and the drive device (12) can be activated only while the operating table (10) is fixed in place, as long as no further infrared control signals are transmitted.

7. Apparatus for carrying out the method as claimed in one of the preceding claims comprising an operator control unit (30) and an operating table (10) with a drive device (12), the operating table (10) being motor-adjustable by means of the drive device (12) and command signals for optionally activating the drive device (12) being wirelessly transmittable to the operating table (10) from the operator control unit (30), **characterized in that** the operator control unit (30) has an infrared transmitter (38) for emitting an infrared control signal and a radio receiver (36) for receiving a radio signal, and **in that** the operating table (10) has an infrared receiver (18) for receiving the infrared control signal and a radio transmitter (20) for emitting a confirmation signal confirming the reception of the control signal, and the drive device (12) can only be activated after the operator control unit (30) has received the confirmation signal.

8. Apparatus as claimed in claim 7, **characterized in that** the command signals can be transmitted in the form of radio signals.

9. Apparatus as claimed in claim 7, **characterized in that** the command signals can be transmitted in the form of infrared signals.

10. Apparatus as claimed in one of claims 7 to 9, **characterized in that** infrared control signals can be repeatedly emitted by the operator control unit (30) at predetermined intervals and in each case the reception of a confirmation signal can be monitored.

11. Apparatus as claimed in one of claims 7 to 10, **characterized in that** the operating table (10) has a fixing element (14) for fixing the operating table (10) in place, and **in that** the drive device (12) can be activated only in the fixed state of the operating table (10), as long as no further infrared control signals are transmitted.

12. Apparatus as claimed in claim 11, **characterized in that** the fixing element comprises a brake (14), and **in that** it is only possible for the drive device (12) to be activated in the absence of infrared control signals with the brake applied.

## Revendications

1. Procédé de télécommande d'une table d'opération (10), réglable par moteur au moyen d'un dispositif d'entraînement (12), des signaux de commande étant transmis sans fil par un dispositif de commande (30) vers la table d'opération (10) en vue de commander le dispositif d'entraînement (12), **caractérisé en ce que**, avant la transmission des signaux de commande par le dispositif de commande (30), un signal de contrôle infrarouge est d'abord émis vers la table d'opération (10) et la réception du signal de contrôle par le dispositif de commande (30) est confirmée par signal radio.

2. Procédé selon la revendication 1, **caractérisé en ce que** le dispositif d'entraînement (12) ne peut être activé que lorsque le dispositif de commande (30) a reçu le signal radio de la table d'opération (10) confirmant la réception.

3. Procédé selon la revendication 1 ou 2, **caractérisé en ce que** les signaux de commande sont transmis sous la forme de signaux radio.

4. Procédé selon la revendication 1 ou 2, **caractérisé en ce que** les signaux de commande sont transmis sous la forme de signaux infrarouges.

5. Procédé selon l'une quelconque des revendications précédentes, **caractérisé en ce que** le dispositif de commande (30) émet itérativement à intervalles prédéfinis des signaux infrarouges et surveille respectivement la réception d'un signal de confirmation.

6. Procédé selon l'une quelconque des revendications précédentes, **caractérisé en ce que** la table d'opération (10) peut être bloquée de manière stationnaire et le dispositif d'entraînement (12) ne peut être activé que lorsque la table d'opération (10) est bloquée de manière stationnaire, pour autant qu'aucun autre signal de contrôle infrarouge n'ait été transmis.

7. Dispositif destiné à la mise en oeuvre du procédé selon l'une quelconque des revendications précédentes, comportant un dispositif de commande (30) et une table d'opération (10) avec un dispositif d'entraînement (12), la table d'opération (10) étant réglable par un moteur au moyen du dispositif d'entraînement (12) et des signaux de commande pouvant être transmis sans fil par le dispositif de commande (30) vers la table d'opération (10) en vue d'activer à la demande le dispositif d'entraînement (12), **caractérisé en ce que** le dispositif de commande (30) comporte un émetteur infrarouge (38) destiné à émettre un signal de contrôle infrarouge, ainsi qu'un récepteur radio (36) destiné à capter un signal radio, et **en ce que** la table d'opération (10) comporte un récepteur infrarouge (18) destiné à capter le signal de contrôle infrarouge, ainsi qu'un émetteur radio (20) destiné à émettre un signal de confirmation attestant la réception du signal de contrôle, le dispositif d'entraînement (12) pouvant être activé seulement lorsque le dispositif de commande (30) a reçu le signal de confirmation.

8. Dispositif selon la revendication 7, **caractérisé en ce que** les signaux de commande peuvent être transmis sous la forme de signaux radio.

9. Dispositif selon la revendication 7, **caractérisé en ce que** les signaux de commande peuvent être transmis sous la forme de signaux infrarouges.

10. Dispositif selon l'une quelconque des revendications 7 à 9, **caractérisé en ce que** des signaux de contrôle infrarouges peuvent être émis itérativement à intervalles prédéfinis par le dispositif de commande (30) et, dans chaque cas, la réception d'un signal de confirmation peut être surveillée.

11. Dispositif selon l'une quelconque des revendications 7 à 10, **caractérisé en ce que** la table d'opération (10) comporte un organe de blocage (14) destiné à bloquer de manière stationnaire la table d'opération (10) et **en ce que** le dispositif d'entraînement (12) ne peut être activé que dans la position bloquée de la table d'opération (10), pour autant qu'aucun autre signal de contrôle infrarouge n'ait été transmis.

12. Dispositif selon la revendication 11, **caractérisé en ce que** l'organe de blocage comporte un frein (14) et **en ce que**, en l'absence de signaux de contrôle infrarouges, le dispositif d'entraînement (12) ne peut être activé que si le frein est bloqué.
